# EUROPEAN PATENT APPLICATION

(11) **EP 4 741 264 A1**
(43) Date of publication of application: **13.05.2026**
(21) Application number: 25214192.4
(22) Date of filing: 07.11.2025
(51) Int. Cl.: B62D 35/00

(54) **VEHICLE**

(30) Priority: 07.11.2024 GB 202416400
(71) Applicant: McLaren Automotive Limited, Woking, Surrey GU21 4YH (GB)
(72) Inventor: Lo Re, Antonino, Woking GU21 4YH (GB); Suehlmann, Tobias, Woking GU21 4YH (GB)
(74) Representative: Slingsby Partners LLP

(57) **Abstract**

A vehicle comprising a vehicle body, the vehicle body comprising: an exterior surface; and a slot formed in the exterior surface, the slot extending from a forward position forward of an occupant compartment of the vehicle to a rearward position rearward of the occupant compartment of the vehicle, the slot being an opening to a channel in the vehicle body, the channel comprising: one or more air vents; one or more moveable air baffles; and/or a handle for opening an occupant door of the vehicle.

## Description

### BACKGROUND

This invention relates to a vehicle.

When a vehicle is in motion it interacts with air in its surroundings. For example, when a vehicle is in forward motion, a rearward flow of air interacts with that vehicle. In another example, when a vehicle is cornering, a lateral flow of air (e.g. a "cross-wind") interacts with that vehicle.

The manner in which a vehicle in motion interacts with air in its surroundings can significantly affect the performance and handling characteristics of that vehicle. For example, aerodynamic drag can be caused by air impinging on the surfaces of a vehicle in motion. In another example, lift and/or further aerodynamic drag can be caused by air accumulating in the wheel arches of a vehicle in motion. Aerodynamic drag can negatively affect the maximum speed of a vehicle. Lift can destabilise a vehicle, both when that vehicle is traveling in a straight line and during cornering.

It is desirable to minimise the aerodynamic drag and/or lift experienced by a vehicle in motion, preferably both when that vehicle is traveling in a straight line and during cornering.

### SUMMARY OF THE INVENTION

According to a first aspect of the present invention there is provided a vehicle comprising a vehicle body, the vehicle body comprising: an exterior surface; and a slot formed in the exterior surface, the slot extending from a forward position forward of an occupant compartment of the vehicle to a rearward position rearward of the occupant compartment of the vehicle, the slot being an opening to a channel in the vehicle body, the channel comprising: one or more air vents; one or more moveable air baffles; and/or a handle for opening an occupant door of the vehicle.

The exterior surface may be at least partially defined by a plurality of body panels, the slot may be formed in one or more body panels of the plurality of body panels.

The exterior surface may be at least partially defined by a plurality of body panels, the slot may be formed between multiple body panels of the plurality of body panels.

The exterior surface may be at least partially defined by a plurality of body panels, a first section of the slot may be formed in one or more body panels of the plurality of body panels and a second section of the slot may be formed between multiple body panels of the plurality of body panels.

The vehicle may comprise a front wheel arch, the one or more air vents may comprise a front wheel arch air vent for venting air from the front wheel arch.

A front wheel may be positioned in the front wheel arch, the front wheel arch air vent may extend a length of the channel that is greater than or equal to the radius of the front wheel.

The front wheel arch air vent may have an aspect ratio of at least 10:1.

The vehicle may comprise a heat exchanger, the one or more air vents may comprise a heat exchanger air vent for venting air from the heat exchanger.

The heat exchanger may be at least partially rearward of the occupant compartment of the vehicle.

The one or more moveable air baffles may comprise a front moveable air baffle forward of the occupant door of the vehicle.

The front moveable air baffle may be moveable relative to the channel.

The front moveable air baffle may be moveable to a position in which it protrudes from the channel.

The front moveable air baffle may be moveable between a first position in which it is does not protrude from the channel and a second position in which it protrudes from the channel.

The vehicle may be configured to control movement of the front moveable air baffle in dependence on a sideslip angle of the vehicle, a yaw rate of the vehicle and/or a steering angle of the vehicle.

The one or more moveable air baffles may comprise a rear moveable air baffle rearward of the occupant door of the vehicle.

The rear moveable air baffle may be moveable relative to the channel.

The rear moveable air baffle may be moveable to a position in which it protrudes from the channel.

The rear moveable air baffle may be moveable between a first position in which it is does not protrude from the channel and a second position in which it protrudes from the channel.

The vehicle may be configured to control movement of the rear moveable air baffle in dependence on a sideslip angle of the vehicle, a yaw rate of the vehicle and/or a steering angle of the vehicle.

The channel may have a median plane that is substantially parallel to the longitudinal axis of the vehicle.

The vehicle may comprise a wing mirror or wing camera supported by a stem that protrudes from the channel.

The slot may be continuous between the forward position and the rearward position.

The slot may be intermittent between the forward position and the rearward position.

### BRIEF DESCRIPTION OF THE DRAWINGS

The present invention will now be described by way of example with reference to the accompanying drawings. In the drawings:
Figure 1 shows a perspective view of a vehicle.
Figure 2 shows a plan view of a vehicle.
Figure 3 shows a side view of front wheel arch of a vehicle.
Figure 4 shows a side view of rear wheel arch of a vehicle.
Figure 5 shows a cross-sectional view of a channel in a vehicle body.

### DETAILED DESCRIPTION OF THE DRAWINGS

The following description is presented to enable any person skilled in the art to make and use the invention, and is provided in the context of a particular application. Various modifications to the disclosed embodiments will be readily apparent to those skilled in the art.

The general principles defined herein may be applied to other embodiments and applications without departing from the spirit and scope of the present invention. Thus, the present invention is not intended to be limited to the embodiments shown, but is to be accorded the widest scope consistent with the principles and features disclosed herein.

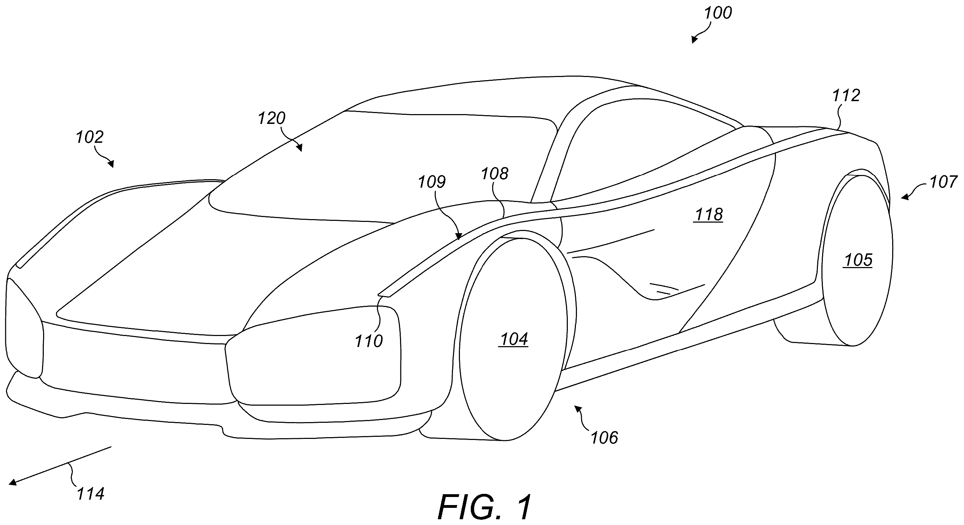

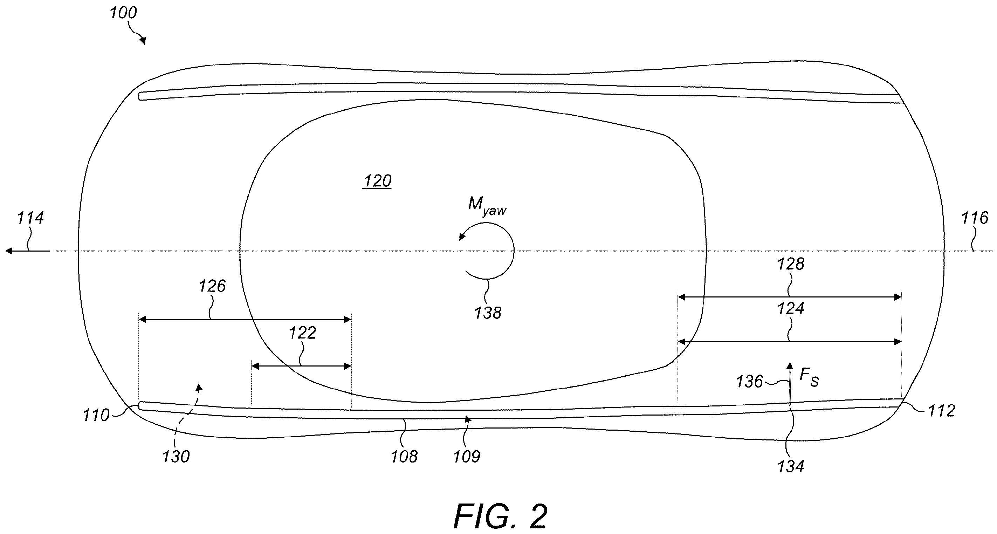

Figure 1 shows a perspective view of a vehicle 100. Figure 2 shows a plan view of vehicle 100.

Figure 1 primarily shows the left-hand-side of vehicle 100. The right-hand-side of vehicle 100 can be a mirror image of the left-hand-side of vehicle 100. That is, it will be understood that, for each component described with reference to the left-hand-side of vehicle 100 shown in Figure 1, an identical component may also be present on the right-hand-side of vehicle 100.

Vehicle 100 may be an automobile. Vehicle 100 may be a car.

The front of vehicle 100 is defined with reference to the primary direction of motion of vehicle 100. The front of vehicle 100 points in the primary motion direction of motion of vehicle 100. Vehicle 100 has a primary direction of motion of that is in the forward direction 114. When vehicle 100 is moving in the forward direction 114, it can be said to be in forward motion.

Vehicle 100 comprises a vehicle body 102. Vehicle body 102 comprises a chassis and/or tub, and a plurality of body panels. A tub is a structural component of a vehicle. A tub may be made of a composite material such as a carbon fibre / resin composite. A tub may form part of a chassis. The body panels may be attached to the chassis and/or tub. The body panels may define the exterior surface of vehicle body 102 in one or more of the following areas of vehicle 100: nose; bonnet (e.g. hood); wing; occupant door(s); roof; fender; and rear deck. The exterior surface of vehicle body 102 in each of these listed example areas of vehicle 100 may be defined by one or more body panels. Each body panel may be a sheet element whose outer surface defines part of the exterior surface of vehicle body 102. In other words, vehicle body 102 comprises an exterior (e.g. outer) surface, which can be at least partially defined by a plurality of body panels. The body panels may conveniently be made of a composite material such as a carbon fibre / resin composite, or of a metal such as aluminium or steel.

Vehicle body 102 also has an underside (e.g. "undertray", or "floor"). The underside of vehicle body 102 may face a running surface on which vehicle 100 is supported. The running surface may be, for example, a road, a racing track, or an off-road surface. The underside of vehicle body 102 may comprise any portion of vehicle body 102 that faces the running surface. The underside of vehicle body 102 may be formed of the tub and/or a plurality of panels that together form the underside of vehicle body 102.

Vehicle 100 comprises a plurality of wheels. Vehicle 100 comprises a plurality of wheel arches. Vehicle 100 comprises one wheel arch per wheel. In the example shown in Figure 1, vehicle 100 comprises four wheels and four wheel arches - although it is to be understood that a vehicle according to the principles described herein may comprise more or fewer wheels and wheel arches. Figure 1 shows front wheel 104, rear wheel 105, front wheel arch 106, and a rear wheel arch 107. Front wheel 104 is positioned in front wheel arch 106. Rear wheel 105 is positioned in rear wheel arch 107. The wheel arches each form an opening in the underside of vehicle body 102 through which the respective wheel extends. The openings permit each wheel to contact the running surface on which the wheels can support vehicle body 102 of vehicle 100.

Each of the plurality of wheels is associated with a respective suspension system (not visible in the Figures). The suspension system for a wheel comprises a plurality of suspension linkages. The suspension linkages support vehicle body 102 of vehicle 100 by connecting the wheel to vehicle body 102. Each suspension linkage is designed to permit the wheel to move relative to vehicle body 102. This movement of the wheel enables vehicle body 102 to be at least partially isolated from displacements of the wheel relative to vehicle body 102. Various suitable suspension systems are known to the skilled person - and so, for conciseness, the suspension system will not be described herein in detail.

Vehicle 100 comprises an occupant compartment 120. The extent of occupant compartment 120 is illustrated in the plan view of vehicle 100 shown in Figure 2. Occupant compartment 120 may comprise one or more seats for occupants of vehicle 100 to sit in. Occupant compartment 120 may accommodate a driver. Occupant compartment 120 may also accommodate one or more passengers. Occupant input interfaces (e.g. a steering wheel, pedals, a touch screen, switches and/or buttons etc.) may be located within occupant compartment 120 to enable an occupant to control various aspects of vehicle 100 (e.g. its motion, which of a plurality of driving modes it is operating in, etc.).

A vehicle can comprise one or more occupant doors that enable an occupant to access occupant compartment 120. Vehicle 100 shown in Figure 1 comprises two occupant doors that enable occupants to access occupant compartment 120 from opposite sides of vehicle 100. Occupant door 118 is rearward of front wheel arch 106. The term "rearward" is defined relative to, or with reference to, the forward direction 114. In other words, occupant door 118 is generally a greater distance from the front of vehicle 100 than front wheel arch 106. As illustrated in Figure 1, occupant door 118 may delimit part of front wheel arch 106 and so it is to be understood that occupant door 118 extends to a position on vehicle 100 that is a greater distance from the front of vehicle 100 than any part of front wheel arch 106. Occupant door 118 is forward of rear wheel arch 107. The term "forward" is defined relative to, or with reference to, the forward direction 114. In other words, occupant door 118 is generally a lesser distance from the front of vehicle 100 than rear wheel arch 107. In some examples, not shown in the Figures, occupant door 118 may delimit part of rear wheel arch 107 and so it is to be understood that occupant door 118 extends to a position on vehicle 100 that is a lesser distance from the front of vehicle 100 than any part of rear wheel arch 107. In other examples (not shown in the Figures), a vehicle may comprise more than one occupant door on each side of that vehicle. In these examples, each occupant door on each side of the vehicle may be rearward of the front wheel arch and forward of the rear wheel arch on that side of that vehicle. In other examples (not shown), a vehicle (e.g. such as a track racing vehicle) may not comprise any occupant doors. In these examples, an occupant may access the occupant compartment via an opening (e.g. a window opening) in the side of that vehicle.

As described herein, vehicle body 102 comprises an exterior surface. As illustrated in Figures 1 and 2, a slot 108 can be formed in the exterior surface of vehicle body 102. Slot 108 may be an aperture (e.g. "slit") in the exterior surface of vehicle body 102. As illustrated in Figure 1, slot 108 can be formed in an upper exterior surface of vehicle body 102. That is, slot 108 can be formed in an exterior surface of vehicle body 102 that does not face the running surface. In other words, slot 108 can be formed in an exterior surface of vehicle body 102 that is not part of the underside of vehicle body 102).

Slot 108 extends from a forward position 110 forward of occupant compartment 102 to a rearward position 112 rearward of occupant compartment 102. The terms "forward" and "rearward" are defined relative to, or with reference to, the forward direction 114. That is, slot 108 spans between: forward position 110 that is a lesser distance from the front of vehicle 100 than any part of occupant compartment 102; and rearward position 112 that is a greater distance from the front of vehicle 100 than any part of occupant compartment 102. In other words, slot 108 may extend from forward position 110 in a region of vehicle body 102 that at least partially defines front wheel arch 106 to rearward position 112 in a region of vehicle body 102 that at least partially defines rear wheel arch 107. In examples in which vehicle 100 comprises an occupant door 118 as described herein, slot 108 may extend from forward position 110 in the region of vehicle body 102 that at least partially defines front wheel arch 106, through a region of vehicle body 102 that at least partially defines occupant door 118, to rearward position 112 in the region of vehicle body 102 that at least partially defines rear wheel arch 107.

Slot 108 may have a high aspect ratio (e.g. be "long and narrow"). For example, slot 108 may have an aspect ratio (e.g. defined as a length:width ratio) of at least 80:1; preferably at least 100:1, more preferably at least 115:1, most preferably at least 125:1.

As described herein, the exterior surface of vehicle body 102 can be at least partially defined by a plurality of body panels. In an example, slot 108 can be formed in one or more body panels of the plurality of body panels. In other words, slot 108 may be an aperture in one or more body panels of the plurality of body panels. In another example, slot 108 may be formed between multiple body panels of the plurality of body panels. In other words, slot 108 may be a gap between the edges of two adjacent body panels. In some examples, a first section of slot 108 may be formed in one or more body panels of the plurality of body panels and a second section of slot 108 may be formed between multiple body panels of the plurality of body panels. It is to be understood that slot 108 may have any suitable number of sections. By way of nonlimiting example, as illustrated in Figure 1: a first section of slot 108 may be formed in (e.g. may be an aperture in) the body panel that at least partially defines front wheel arch 106; a second section of slot 108 may be formed between (e.g. may be a gap between the edges of) a first body panel that defines a lower portion of occupant door 118 and a second body panel that defines an upper portion of occupant door 118; and a third section of slot 108 may be formed between (e.g. may be a gap between the edges of) a body panel that at least partially defines rear wheel arch 107 and a body panel that at least partially defines the rear deck of vehicle 100.

As shown in Figures 1 and 2, slot 108 may be continuous (e.g. uninterrupted) between forward position 110 and rearward position 112. A continuous slot may span multiple different body panels. In other words, a slot that spans (e.g. bridges, or remains open across) a gap between adjacent body panels can be considered to be a continuous slot. For example, as shown in Figure 1, slot 108 spans (e.g. bridges, or remains open across) the gap between the body panel that at least partially defines front wheel arch 106 and the body panel that at least partially defines occupant door 118.

In other examples (not shown in the Figures), a slot according to the principles described herein may be intermittent between forward position 110 and rearward position 112. In other words, the slot may comprise a plurality of intermittent openings between forward position 110 and rearward position 112. The plurality of intermittent openings may, together, define that slot. The longitudinal axes of each of the plurality of intermittent openings may be substantially aligned. In these examples, the cumulative (e.g. total) length of the plurality of intermittent openings may be at least 50%, preferably at least 70%, more preferably at least 80%, even more preferably at least 90%, most preferably at least 95%, of the length of the exterior surface of vehicle body 102 between forward position 110 and rearward position 112.

Slot 108 is an opening to a channel (e.g. groove) 109 in vehicle body 102. It follows that channel 109 also extends from forward position 110 to rearward position 112. Channel 109 may be continuous (e.g. uninterrupted) between forward position 110 and rearward position 112. Channel 109 may be intermittent between forward position 110 and rearward position 112.

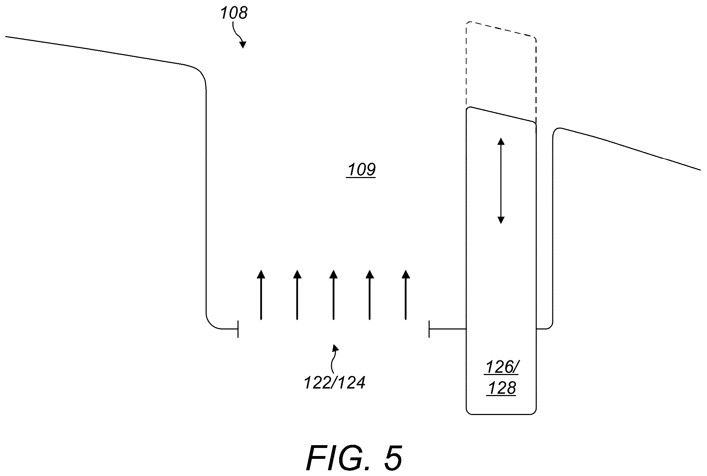

Channel 109 may be at least partially defined by one or more interior surfaces of vehicle body 102. Channel 109 may have any suitable cross-section. For example, Figure 5 shows a cross-sectional view of an example channel 109 in vehicle body 102. As shown in Figure 5, channel 109 may have a quadrilateral cross-section - e.g. three sides of that quadrilateral being defined by three interior surfaces of the vehicle body, and one side of that quadrilateral being open to the exterior of vehicle 100. Channel 109 may have a width of between 5mm and 150mm, preferably between 10mm and 75mm. In a specific example, channel 109 may have a width of 25mm. Channel 109 may have a depth of at least 5mm, preferably at least 10mm, more preferably at least 15mm. The width and/or depth of channel 109 may be constant along the length of channel 109 between forward position 110 and rearward position 112. The width and/or depth of channel 109 may vary along the length of channel 109 between forward position 110 and rearward position 112. For example, a forward section of channel 109 may have a width of between 5mm and 50mm, and a rearward section of channel 109 may have a width of between 25mm and 75mm. The width and/or depth of channel 109 may vary gradually (e.g. smoothly) along the length of channel 109 between forward position 110 and rearward position 112.

Channel 109 is a space (e.g. void) that can be used to conceal a number of functional components of vehicle 100. A channel 109 that extends from forward position 110 to rearward position 112 and conceals a number of functional components may be less disruptive to ambient air flowing over the exterior surface of vehicle body 102 when vehicle 100 is in motion (e.g. thereby reducing the aerodynamic drag caused by air impinging on those functional components) than if those functional components were to be provided independently of one another and to protrude from the exterior surface of vehicle body 102.

Returning to Figure 2, channel 109 may have a median plane that is substantially parallel to the longitudinal axis 116 of vehicle 100. The median plane is a vertical plane that passes through the midline of channel 109 and bisects channel 109 into two substantially symmetrical halves. Longitudinal axis 116 of vehicle 100 may be colinear with, or parallel to, the forward direction 114 - which is the primary direction of motion of vehicle 100. Channel 109 may be substantially linear between forward position 110 and rearward position 112 - although this need not be the case. For example, a forward section and/or a rearward section of channel 109 may curve towards the longitudinal axis 114 of vehicle 100.

Channel 109 comprises: one or more air vents; one or more moveable air baffles; and/or a handle for opening occupant door 118. In other words, channel 109 conceals: one or more air vents; one or more moveable air baffles; and/or a handle for opening occupant door 118. In some examples, channel 109 comprises (e.g. conceals) at least two of: one or more air vents; one or more moveable air baffles; and a handle for opening occupant door 118. That is, as an illustrative example, channel 109 may comprise (e.g. conceal) an air vent and a moveable air baffle.

In examples where channel 109 comprises one or more air vents, the one or more air vents may comprise a wheel arch air vent for venting air from a wheel arch of vehicle 100. The wheel arch may be a front wheel arch or a rear wheel arch.

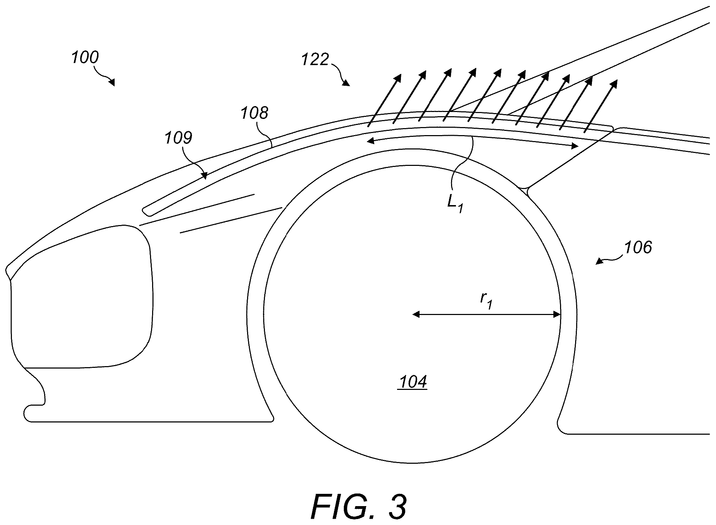

As an illustrative example, Figure 3 shows a side view of front wheel arch 106 of vehicle 100. Figure 3 shows front wheel 104, front wheel arch 106, a forward section of slot 108 and a forward section of channel 109, as described herein with reference to Figures 1 and 2. Figure 3 also illustrates a front wheel arch air vent 122.

When vehicle 100 is in forward motion, air can accumulate in front wheel arch 106. This can increase the wheel arch pressure of front wheel arch 106, which can lead to vehicle 100 experiencing increased lift and/or aerodynamic drag - as would be understood by the skilled person. It is desirable to reduce the amount of lift and aerodynamic drag experienced by vehicle 100. To achieve this, the one or more air vents comprised by channel 109 may comprise a front wheel arch air vent 122 (e.g. as illustrated in Figures 2, 3 and 5) for venting air from front wheel arch 106. As illustrated in Figure 5, front wheel arch air vent 122 may be formed in an interior surface of vehicle body 102 that at least partially defines channel 109. Front wheel arch air vent 122 may be the outlet of a passage (e.g. duct), through which air can flow, between front wheel arch 106 and the exterior of vehicle 100. In this way, front wheel arch air vent 122 can permit air that has accumulated in front wheel arch 106 to escape to the exterior of vehicle 100. Channel 109 may comprise one or more vanes and/or projections (not shown in Figure 5, for ease of illustration) that are arranged (e.g. angled) to aid in directing air escaping from front wheel arch air vent 122 "upwards" (e.g. in a direction away from the running surface) and "rearwards" (e.g. as illustrated by arrows in Figure 3)..

As illustrated in Figure 3, front wheel arch air vent 122 may extend a length (*L₁*) of channel 109 that is greater than or equal to the radius (*r₁*) of front wheel 104. That is, referring to Figure 3, *L₁* ≥ *r₁.* Front wheel arch air vent 122 may have a high aspect ratio (e.g. be "long and narrow"). For example, front wheel arch air vent 122 may have an aspect ratio (e.g. defined as a length:width ratio) of at least 10:1, preferably at least 25:1. By way of example, front wheel arch air vent 122 may have an aspect ratio of up to 50:1. The width of front wheel arch air vent 122 may be at least 10mm, preferably at least 20mm. The width of front wheel arch air vent 122 may be constant along its length, although this need not be the case - e.g. the width of front wheel arch air vent 122 may vary along its length. The extended length and high aspect ratio of front wheel arch air vent 122 can advantageously enable efficient venting of air from front wheel arch 106, thereby efficiently reducing the wheel arch pressure of front wheel arch 106, thereby reducing the amount of lift and aerodynamic drag experienced by vehicle 100. This is relative to a typical wheel arch air vent that often spans a smaller distance and has a lower aspect ratio (e.g. closer to 2:1), which can cause air to buffer and collide at that wheel arch air vent - resulting in inefficient venting of air from that wheel arch.

In examples where channel 109 comprises one or more air vents, the one or more air vents may alternatively, or additionally, comprise a heat exchanger air vent for venting air from a heat exchanger comprised by vehicle 100.

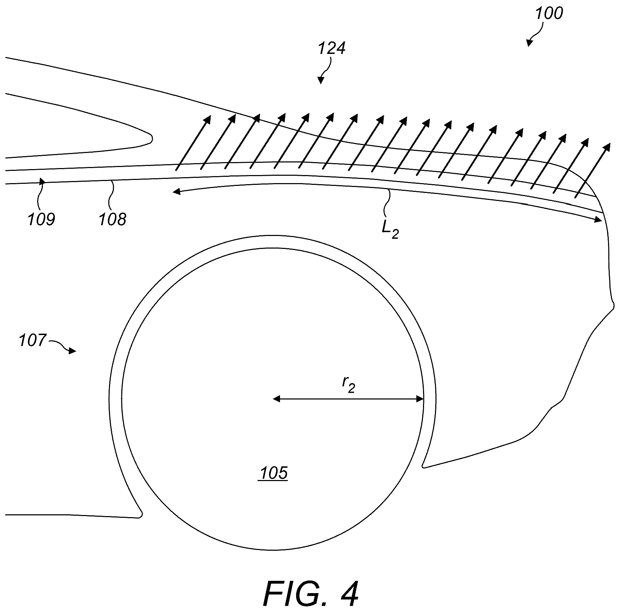

As an illustrative example, Figure 4 shows a side view of rear wheel arch 107 of vehicle 100. Figure 4 shows rear wheel 105, rear wheel arch 107, a rearward section of slot 108 and a rearward section of channel 109, as described herein with reference to Figures 1 and 2. Figure 4 also illustrates a heat exchanger air vent 124.

A heat exchanger can be used to cool one or more operational parts of a vehicle. Some examples of operational parts of a vehicle include an engine, a traction battery, an e-motor, etc. A radiator is an example of a heat exchanger used for this purpose. Typically, heat energy generated by the operational part is transferred to a fluid circulating through the operational part and the heat exchanger. The fluid is often water or an oil. In turn, the heat exchanger transfers heat energy from the fluid to its surroundings. A heat exchanger typically has a large surface area, relative to its volume, to facilitate the transfer of heat energy from the fluid to its surroundings. The transfer of heat energy from a heat exchanger to its surroundings can be increased by causing air to flow through (i.e. over the various surfaces of) that heat exchanger. Air that has flowed through a heat exchanger tends to have a lower kinetic energy, and flow in a more disordered manner, than ambient air flowing over the exterior surface of vehicle body 102 when vehicle 100 is in forward motion. This is owing, at least in part, to that air having impinged on the heat exchanger. It is desirable to control the manner in which this low-energy, disordered, air is vented from (e.g. exits or escapes) the heat exchanger. This is in order to minimise the amount of disruption this low-energy, disordered, air causes to high-energy, ordered, ambient air flowing over the exterior surface of vehicle body 102 when vehicle 100 is in forward motion.

Vehicle 100 may comprise a heat exchanger (not visible in the Figures) that is at least partially rearward of occupant compartment 120. Such a heat exchanger may be referred to herein as a "rear heat exchanger". A rear heat exchanger may be used to cool an operational part that is itself at least partially rearward of occupant compartment 120. This is because it is generally desirable to position a heat exchanger in close proximity to the operational part that it is used to cool, as the length of tubing used to carry the circulating fluid to/from operational part can be minimised.

The one or more air vents comprised by channel 109 may comprise a heat exchanger air vent 124 (e.g. as illustrated in Figures 2, 4 and 5) for venting air from a rear heat exchanger. As illustrated in Figure 5, heat exchanger air vent 124 may be formed in an interior surface of vehicle body 102 that at least partially defines channel 109. Heat exchanger air vent 124 may be the outlet of a passage (e.g. duct), through which air can flow, between the rear heat exchanger and the exterior of vehicle 100. In this way, heat exchanger air vent 124 can permit air that has flowed through the rear heat exchanger to escape to the exterior of vehicle 100. Channel 109 may comprise one or more vanes and/or projections (not shown in Figure 5, for ease of illustration) that are arranged (e.g. angled) to aid in directing air escaping from heat exchanger air vent 124 "upwards" (e.g. in a direction away from the running surface) and "rearwards" (e.g. as illustrated by arrows in Figure 4) in order to minimise the amount of disruption this low-energy, disordered, air causes to high-energy, ordered, ambient air flowing over the exterior surface of vehicle body 102 when vehicle 100 is in forward motion.

As illustrated in Figure 4, heat exchanger air vent 124 may extend a length (*L*₂) of channel 109 that is greater than or equal to the radius (*r₂*) of rear wheel 105. That is, referring to Figure 4, *L₂* ≥ *r₂.* In some examples, heat exchanger air vent 124 may extend a length (*L*₂) of channel 109 that is greater than or equal to double the radius (*r₂*) of rear wheel 105. That is, referring to Figure 4, *L₂* ≥ *2r₂.* Heat exchanger air vent 124 may have a high aspect ratio (e.g. be "long and narrow"). For example, heat exchanger air vent 124 may have an aspect ratio (e.g. defined as a length:width ratio) of at least 20:1, preferably at least 50:1. By way of example, heat exchanger air vent 124 may have an aspect ratio of up to100:1. The width of heat exchanger air vent 124 may be at least 10mm, preferably at least 20mm. The width of heat exchanger air vent 124 may be constant along its length, although this need not be the case - e.g. the width of heat exchanger air vent 124 may vary along its length. The extended length and high aspect ratio of heat exchanger air vent 124 can advantageously enable efficient venting of air from the heat exchanger.

As described herein, channel 109 may additionally, or alternatively, comprise one or more moveable air baffles. A moveable air baffle may span the full length of channel 109 (e.g. the full length of channel 109 being the length of channel 109 between forward position 110 and rearward position 112), or less than the full length of channel 109. In other words, a moveable air baffle may span a section of channel 109, the length of that section being less than the length of channel 109. An air baffle is a component that can be used to disrupt (e.g. obstruct, or re-direct) a flow of air. A moveable air baffle is an air baffle that can, during normal operation of vehicle 100, be moved relative to channel 109. In an example, such an air baffle may be moveable between a first position in which it is does not protrude from channel 109 and a second position in which it protrudes from channel 109. In another example, such an air baffle may be moveable between a first position in which it protrudes a lesser distance from channel 109 and a second position in which it protrudes a greater distance from channel 109. In both examples, when the moveable air baffle is positioned in its second position, it can disrupt (e.g. obstruct, or re-direct) an airflow generated when vehicle 100 is in motion. Movement of the moveable air baffle may be controlled in dependence on a steering angle of vehicle 100, a sideslip angle of vehicle 100, a yaw rate of vehicle 100, and/or any other suitable lateral state of vehicle 100. Movement of the moveable air baffle may be driven by any suitable means, e.g. one or more electrical, hydraulic or pneumatic actuators.

In a first illustrative example in which channel 109 comprises one or more moveable air baffles, the one or more moveable air baffles may comprise a front moveable air baffle 126 (e.g. as illustrated in Figures 2 and 5). Front moveable air baffle 126 may be forward of occupant door 118. That is, front moveable air baffle 126 may extend to a position on vehicle 100 that is a lesser distance from the front of vehicle 100 than any part of occupant door 118. Front moveable air baffle 126 may span a forward section of channel 109, the length of the forward section being less than the full length of channel 109 (e.g. the full length of channel 109 being the length of channel 109 between forward position 110 and rearward position 112). By way of example, a suitable length of front moveable air baffle 126 is illustrated in Figure 2.

Front moveable air baffle 126 may be moveable relative to channel 109. In particular, front moveable air baffle 126 may be moveable "upwards" and "downwards" (e.g. towards and away from the running surface) relative to channel 109. Front moveable air baffle 126 may be moveable by a distance of between 5mm and 50mm relative to channel 109. In an example, front moveable air baffle 126 may be moveable between a first position (e.g. as illustrated using solid lines in Figure 5) in which it is does not protrude from channel 109 and a second position (e.g. as illustrated using dashed lines in Figure 5) in which it protrudes from channel 109. In another example, front moveable air baffle 126 may be moveable between a first position in which it protrudes a lesser distance from channel 109 and a second position in which it protrudes a greater distance from channel 109. In both examples, front moveable air baffle 126 may be configured to, when positioned in its second position, disrupt an airflow 130 generated when vehicle 100 is in motion. Airflow 130 may be a lateral flow of ambient air (e.g. a "cross-wind") generated when vehicle 100 is cornering - for example, when vehicle 100 is in motion and steering to the left, in the example shown in Figure 2. Front moveable air baffle 126 may be configured such that, when it is positioned in its second position, it causes a boundary layer transition which stabilises the flow regime of airflow 130 from laminar to turbulent (as illustrated using solid and dashed lines, respectively, in Figure 2). Put another way, when front moveable air baffle 126 protrudes from channel 109, it may function as a "boundary layer trip" - as would be understood the skilled person. Stabilising the flow regime of airflow 130 from laminar to turbulent in this way can reduce the aerodynamic drag experienced by vehicle 100 when it is cornering. That said, when vehicle 100 is in forward motion and not cornering, a rearward flow of air over the exterior surface of vehicle body 102 may impinge on the front moveable air baffle 126 were it to protrude from channel 109, thereby increasing the aerodynamic drag experienced by vehicle 100 when it is in forward motion and not cornering. As such, vehicle 100 may be configured to control the movement of front moveable air baffle 126 in dependence on a steering angle of vehicle 100, a sideslip angle of vehicle 100, a yaw rate of vehicle 100, and/or any other suitable lateral state of vehicle 100. For example, vehicle 100 may be configured to move front moveable air baffle 126: "upwards" (e.g. towards its second position) as the steering angle of vehicle 100 increases; and "downwards" (e.g. towards its first position) as the steering angle of vehicle 100 decreases.

As described herein, for each component described with reference to the left-hand-side of vehicle 100 shown in Figure 1, an identical component may also be present on the right-hand-side of vehicle 100. As such, vehicle 100 may comprise a front moveable air baffle 126 comprised by a channel 109 on its left-hand-side, and a front moveable air baffle 126 comprised by a channel 109 on its right-hand-side. In some examples, a front moveable air baffle 126 on one side of vehicle 100 may be moveable independently of a front moveable air baffle 126 on the other side of vehicle 100. For example, when vehicle 100 is steering to the left, it may be configured to position the front moveable air baffle 126 on its left-hand-side in its second position (e.g. to function as a "boundary layer trip") and position the front moveable air baffle 126 on its right-hand-side in its first position (e.g. to avoid generating an undesirable yaw moment). Likewise, when vehicle 100 is steering to the right, it may be configured to position the front moveable air baffle 126 on its right-hand-side in its second position (e.g. to function as a "boundary layer trip") and position the front moveable air baffle 126 on its left-hand-side in its first position (e.g. to avoid generating an undesirable yaw moment).

The width of front moveable air baffle 126 may be between 3mm and 10mm. In a specific example, front moveable air baffle 126 may have a width of 5mm. The width of front moveable air baffle 126 may be constant along its length, although this need not be the case - e.g. the width of front moveable air baffle 126 may vary along its length.

In a second illustrative example in which channel 109 comprises one or more moveable air baffles, the one or more moveable air baffles may comprise a rear moveable air baffle 128 (e.g. as illustrated in Figures 2 and 5). Rear moveable air baffle 128 may be rearward of occupant door 118. That is, rear moveable air baffle 128 may extend to a position on vehicle 100 that is a greater distance from the front of vehicle 100 than any part of occupant door 118. Rear moveable air baffle 128 may span a rearward section of channel 109, the length of the rearward section being less than the full length of channel 109 (e.g. the full length of channel 109 being the length of channel 109 between forward position 110 and rearward position 112). By way of example, a suitable length of rear moveable air baffle 128 is illustrated in Figure 2.

Rear moveable air baffle 128 may be moveable relative to channel 109. In particular, rear moveable air baffle 128 may be moveable "upwards" and "downwards" (e.g. towards and away from the running surface) relative to channel 109. Rear moveable air baffle 128 may be moveable by a distance of between 5mm and 50mm relative to channel 109. Rear moveable air baffle 128 may be moveable by the same distance, a greater distance, or a lesser distance than front moveable air baffle 126. Rear moveable air baffle 128 may be moveable independently of front moveable air baffle 126. In an example, rear moveable air baffle 128 may be moveable between a first position (e.g. as illustrated using solid lines in Figure 5) in which it is does not protrude from channel 109 and a second position (e.g. as illustrated using dashed lines in Figure 5) in which it protrudes from channel 109. In another example, rear moveable air baffle 128 may be moveable between a first position in which it protrudes a lesser distance from channel 109 and a second position in which it protrudes a greater distance from channel 109. In both examples, rear moveable air baffle 128 may be configured to, when positioned in its second position, disrupt an airflow 134 generated when vehicle 100 is in motion. Airflow 134 may be a lateral flow of ambient air (e.g. a "cross-wind") generated when vehicle 100 is cornering - for example, when vehicle 100 is in motion and steering to the left, in the example shown in Figure 2. Rear moveable air baffle 128 may be configured such that, when it is positioned in its second position, airflow 134 impinges on rear moveable air baffle 128 thereby generating a side force Fs 136, which thereby generates a yaw moment *M_{yaw}* 138 about the centre of gravity of vehicle 100. Generating yaw moment *M_{yaw}* 138 in this way can increase the stability of vehicle 100 when it is cornering. That said, when vehicle 100 is in forward motion and not cornering, a rearward flow of air over the exterior surface of vehicle body 102 may impinge on the rear moveable air baffle 128 were it to protrude from channel 109, thereby increasing the aerodynamic drag experienced by vehicle 100 when it is in forward motion and not cornering. As such, vehicle 100 may be configured to control the movement of rear moveable air baffle 128 in dependence on a steering angle of vehicle 100, a sideslip angle of vehicle 100, a yaw rate of vehicle 100, and/or any other suitable lateral state of vehicle 100. For example, vehicle 100 may be configured to move rear moveable air baffle 128: "upwards" (e.g. towards its second position) as the steering angle of vehicle 100 increases; and "downwards" (e.g. towards its first position) as the steering angle of vehicle 100 decreases.

As described herein, for each component described with reference to the left-hand-side of vehicle 100 shown in Figure 1, an identical component may also be present on the right-hand-side of vehicle 100. As such, vehicle 100 may comprise a rear moveable air baffle 128 comprised by a channel 109 on its left-hand-side, and a rear moveable air baffle 128 comprised by a channel 109 on its right-hand-side. In some examples, a rear moveable air baffle 128 on one side of vehicle 100 may be moveable independently of a rear moveable air baffle 128 on the other side of vehicle 100. For example, when vehicle 100 is steering to the left, it may be configured to position the rear moveable air baffle 128 on its left-hand-side in its second position (e.g. to generate a desirable yaw moment) and position the rear moveable air baffle 128 on its right-hand-side in its first position. Likewise, when vehicle 100 is steering to the right, it may be configured to position the rear moveable air baffle 128 on its right-hand-side in its second position (e.g. to generate a desirable yaw moment) and position the rear moveable air baffle 128 on its left-hand-side in its first position.

The width of rear moveable air baffle 128 may be between 3mm and 10mm. In a specific example, rear moveable air baffle 128 may have a width of 5mm. The width of rear moveable air baffle 128 may be constant along its length, although this need not be the case - e.g. the width of rear moveable air baffle 128 may vary along its length.

It is to be understood that channel 109 may comprise one of, or both of, front moveable air baffle 126 and rear moveable air baffle 128 as described herein.

As illustrated in Figure 5, the same section of channel 109 can comprise both an air vent (e.g. front wheel arch air vent 122 or heat exchanger air vent 124 as described herein) and a moveable air baffle (e.g. front moveable air baffle 126 or rear moveable air baffle 128 as described herein). In particular, a forward section of channel 109 may comprise both front wheel arch air vent 122 and front moveable air baffle 126, and a rearward section of channel 109 may comprise both heat exchanger air vent 124 and rear moveable air baffle 128. There can be synergistic benefits to the same section of channel 109 comprising both an air vent and a moveable air baffle. For example, when front moveable air baffle 126 protrudes from channel 109 (e.g. is in its second position), it can reduce the amount of air from lateral airflow 130 that enters channel 109, thereby enabling air to be vented more efficiently from front wheel arch air vent 122. This can further reduce the lift and aerodynamic drag experienced by vehicle 100. In another example, when rear moveable air baffle 128 protrudes from channel 109 (e.g. is in its second position), it can reduce the amount of air from lateral airflow 134 that enters channel 109, thereby enabling air to be vented more efficiently from heat exchanger air vent 124. This can further improve the cooling of the rear heat exchanger.

As illustrated in Figure 5, the air vent 122 or 124 may be inboard of the moveable airflow baffle 126 or 128. It is to be understood that this need not be the case, and that the air vent 122 or 124 may be outboard of the moveable airflow baffle 126 or 128. The terms "inboard" and "outboard" are defined relative to, or with reference to, the longitudinal axis 116 of vehicle 100 - "inboard" meaning closer to the longitudinal axis 116, and "outboard" meaning further from the longitudinal axis 116.

As described herein, channel 109 may additionally, or alternatively, comprise (e.g. conceal) a handle for opening an occupant door of a vehicle. A handle (not visible in the Figures) for opening occupant door 118 may be configured to, when actuated (e.g. by a user of vehicle 100), release a latch so as to allow occupant door 118 to be opened. That handle may be comprised by channel 109. That is, that handle may be concealed in channel 109. A user of vehicle 100 may access that handle via slot 108 (e.g. by reaching through slot 108 into channel 109). It is advantageous for such a handle for opening occupant door 118 to be comprised by (e.g. concealed in) channel 109 as this can reduce the aerodynamic drag experienced by vehicle 100 when it is in forward motion - e.g. as that handle does not protrude from an exterior surface of vehicle body 102 and so is not an obstacle to air flowing over the exterior surface of vehicle body 102 when the vehicle is in forward motion.

It is to be understood that channel 109 may comprise any one or more of: front wheel arch air vent 122; heat exchanger air vent 124; front moveable air baffle 126; rear moveable air baffle 128; and a handle for opening an occupant door 118.

In some examples, vehicle 100 may comprise a wing mirror (sometimes referred to as a "side-view mirror" or "door mirror") or wing camera (sometimes referred to as a "side-view camera" or "door camera") that is supported by a stem (not shown in the Figures). The stem supporting the wing mirror or wing camera may protrude from channel 109. It may be advantageous for the stem supporting a wing mirror or wing camera to protrude from channel 109 as this can reduce the aerodynamic drag experienced by vehicle 100 when it is in forward motion.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features. In view of the foregoing description it will be evident to a person skilled in the art that various modifications may be made within the scope of the invention.

### ANNEX TO THE DESCRIPTION

1. A vehicle comprising a vehicle body, the vehicle body comprising:
   an exterior surface; and
   a slot formed in the exterior surface, the slot extending from a forward position forward of an occupant compartment of the vehicle to a rearward position rearward of the occupant compartment of the vehicle, the slot being an opening to a channel in the vehicle body, the channel comprising:
      one or more air vents;
      one or more moveable air baffles; and/or
      a handle for opening an occupant door of the vehicle.
2. The vehicle of 1, the exterior surface being at least partially defined by a plurality of body panels, the slot being formed in one or more body panels of the plurality of body panels.
3. The vehicle of 1 or 2, the exterior surface being at least partially defined by a plurality of body panels, the slot being formed between multiple body panels of the plurality of body panels.
4. The vehicle of any of 1 to 3, the exterior surface being at least partially defined by a plurality of body panels, a first section of the slot being formed in one or more body panels of the plurality of body panels and a second section of the slot being formed between multiple body panels of the plurality of body panels.
5. The vehicle of any of 1 to 4, the vehicle comprising a front wheel arch, the one or more air vents comprising a front wheel arch air vent for venting air from the front wheel arch.
6. The vehicle of 5, a front wheel being positioned in the front wheel arch, the front wheel arch air vent extending a length of the channel that is greater than or equal to the radius of the front wheel.
7. The vehicle of 5 or 6, the front wheel arch air vent having an aspect ratio of at least 10:1.
8. The vehicle of any of 1 to 7, the vehicle comprising a heat exchanger, the one or more air vents comprising a heat exchanger air vent for venting air from the heat exchanger.
9. The vehicle of 8, the heat exchanger being at least partially rearward of the occupant compartment of the vehicle.
10. The vehicle of any of 1 to 9, the one or more moveable air baffles comprising a front moveable air baffle forward of the occupant door of the vehicle.
11. The vehicle of 10, the front moveable air baffle being moveable relative to the channel.
12. The vehicle of 10 or 11, the front moveable air baffle being moveable to a position in which it protrudes from the channel.
13. The vehicle of any of 10 to 12, the front moveable air baffle being moveable between a first position in which it is does not protrude from the channel and a second position in which it protrudes from the channel.
14. The vehicle of any of 10 to 13, the vehicle being configured to control movement of the front moveable air baffle in dependence on a sideslip angle of the vehicle, a yaw rate of the vehicle and/or a steering angle of the vehicle.
15. The vehicle of any of 1 to 14, the one or more moveable air baffles comprising a rear moveable air baffle rearward of the occupant door of the vehicle.
16. The vehicle of 15, the rear moveable air baffle being moveable relative to the channel.
17. The vehicle of 15 or 16, the rear moveable air baffle being moveable to a position in which it protrudes from the channel.
18. The vehicle of any of 15 to 17, the rear moveable air baffle being moveable between a first position in which it is does not protrude from the channel and a second position in which it protrudes from the channel.
19. The vehicle of any of 15 to 18, the vehicle being configured to control movement of the rear moveable air baffle in dependence on a sideslip angle of the vehicle, a yaw rate of the vehicle and/or a steering angle of the vehicle.
20. The vehicle of any of 1 to 19, the channel having a median plane that is substantially parallel to the longitudinal axis of the vehicle.
21. The vehicle of any of 1 to 20, the vehicle comprising a wing mirror or wing camera supported by a stem that protrudes from the channel.
22. The vehicle of any of 1 to 21, the slot being continuous between the forward position and the rearward position.
23. The vehicle of any of 1 to 21, the slot being intermittent between the forward position and the rearward position.

## Claims

1. A vehicle comprising a vehicle body, the vehicle body comprising:
an exterior surface; and
a slot formed in the exterior surface, the slot extending from a forward position forward of an occupant compartment of the vehicle to a rearward position rearward of the occupant compartment of the vehicle, the slot being an opening to a channel in the vehicle body, the channel comprising:
one or more air vents;
one or more moveable air baffles; and/or
a handle for opening an occupant door of the vehicle.

2. The vehicle of claim 1, the exterior surface being at least partially defined by a plurality of body panels, the slot being formed in one or more body panels of the plurality of body panels; and/or
the exterior surface being at least partially defined by a plurality of body panels, the slot being formed between multiple body panels of the plurality of body panels; and/or
the exterior surface being at least partially defined by a plurality of body panels, a first section of the slot being formed in one or more body panels of the plurality of body panels and a second section of the slot being formed between multiple body panels of the plurality of body panels.

3. The vehicle of any preceding claim, the vehicle comprising a front wheel arch, the one or more air vents comprising a front wheel arch air vent for venting air from the front wheel arch, and optionally a front wheel being positioned in the front wheel arch, the front wheel arch air vent extending a length of the channel that is greater than or equal to the radius of the front wheel.

4. The vehicle of any preceding claim, the vehicle comprising a heat exchanger, the one or more air vents comprising a heat exchanger air vent for venting air from the heat exchanger, and optionally the heat exchanger being at least partially rearward of the occupant compartment of the vehicle.

5. The vehicle of any preceding claim, the one or more moveable air baffles comprising a front moveable air baffle forward of the occupant door of the vehicle.

6. The vehicle of claim 5, the front moveable air baffle being moveable relative to the channel.

7. The vehicle of claim 5 or 6, the front moveable air baffle being moveable to a position in which it protrudes from the channel.

8. The vehicle of any of claims 5 to 7, the front moveable air baffle being moveable between a first position in which it is does not protrude from the channel and a second position in which it protrudes from the channel.

9. The vehicle of any of claims 5 to 8, the vehicle being configured to control movement of the front moveable air baffle in dependence on a sideslip angle of the vehicle, a yaw rate of the vehicle and/or a steering angle of the vehicle.

10. The vehicle of any preceding claim, the one or more moveable air baffles comprising a rear moveable air baffle rearward of the occupant door of the vehicle.

11. The vehicle of claim 10, the rear moveable air baffle being moveable relative to the channel.

12. The vehicle of claim 10 or 11, the rear moveable air baffle being moveable to a position in which it protrudes from the channel.

13. The vehicle of any of claims 10 to 12, the rear moveable air baffle being moveable between a first position in which it is does not protrude from the channel and a second position in which it protrudes from the channel.

14. The vehicle of any of claims 10 to 13, the vehicle being configured to control movement of the rear moveable air baffle in dependence on a sideslip angle of the vehicle, a yaw rate of the vehicle and/or a steering angle of the vehicle.

15. The vehicle of any preceding claim, the vehicle comprising a wing mirror or wing camera supported by a stem that protrudes from the channel.
